Europäisches Patentamt

(19) European Patent Office

Office européen des brevets

(11) **EP 0 760 507 B1**

(12) **EUROPEAN PATENT SPECIFICATION**

(45) Date of publication and mention
of the grant of the patent:
**05.12.2001 Bulletin 2001/49**

(21) Application number: **96905064.0**

(22) Date of filing: **12.03.1996**

(51) Int Cl.$^7$: **G08G 1/09**

(86) International application number:
**PCT/JP96/00606**

(87) International publication number:
**WO 96/28802 (19.09.1996 Gazette 1996/42)**

(54) **ROUTE GUIDING DEVICE FOR BELT HIGHWAY**

ZIELFÜHRUNGSVORRICHTUNG FÜR RINGAUTOBAHN

DISPOSITIF DE GUIDAGE ROUTIER POUR AUTOROUTE DE CEINTURE

(84) Designated Contracting States:
**DE FR**

(30) Priority: **13.03.1995 JP 5299895**

(43) Date of publication of application:
**05.03.1997 Bulletin 1997/10**

(73) Proprietor: **KABUSHIKI KAISHA TOSHIBA**
**Kawasaki-shi, Kanagawa-ken 210-8572 (JP)**

(72) Inventors:
 • **UENO, Hideki,**
**Creare-Toshiba-Nishifunabashi B527**
**Funabashi-shi, Chiba-ken 273 (JP)**

• **KOKUE, Kohji**
**Iida-shi, Nagano-ken 395 (JP)**

(74) Representative: **Shindler, Nigel**
**Brookes Batchellor**
**102-108 Clerkenwell Road**
**London EC1M 5SA (GB)**

(56) References cited:
**JP-A- 5 114 095       JP-A- 7 021 487**
**JP-A- 52 037 334      JP-A- 54 020 281**
**JP-B- 48 034 080**

## Description

[Technical Field]

The present invention relates to a traffic control system for effectively utilizing a road route and, in particular, a route guiding apparatus on a loop highway which provides, to a vehicle driver, an optimal lane for reaching a destination site along the loop highway.

[Background Art]

The document JP-A-54-020281 discloses an information display for a vehicle showing the high way network of a city having a loop highway, various pieces of information can be displayed there at the parts representing sections of the lanes of the highways.

A traffic monitoring system adapted to, under control, monitor the running states of vehicles in a highway and expressway has been reduced to actual practice. In the traffic monitoring system, the road route to be monitored is divided into a plurality of intervals. The traffic flow data are measured on an averaged speed V of vehicles running through the interval concerned, on the number of vehicles, Q, passing through the interval in a unit time, an occupancy Oc showing a vehicle detection time ratio with which the vehicles are detected in units of time, and so on. Based on the measured traffic flow data it is decided whether or not the respective interval is in a traffic jam. The result is informed to the vehicle drivers.

A practical decision of traffic congestion on the traffic monitoring system is made in the following procedure.

A vehicle detector is installed at the respective interval through which the vehicles move. From the detection signals of the respective vehicle detectors are calculated a speed $V_i$ (km/h) with which the vehicles run through the interval i (i = an index representing 1, 2, ⋯ interval), a traffic amount $Q_i$ (the number of vehicle units) per unit time, and an occupancy $Oc_i$ (%).

The extent of vehicle congestion is classified into a "free flow state" in which the respective vehicle can run in its own capability, a "congested state" in which the running vehicle is slowed down to an averaged speed of, for example, below 10 km/h and a "crowded state" in which the vehicles have to run at a shorter vehicle-to-vehicle distance. These states are, respectively, defined as follows:

"congested state"⋯ $V_i \leqq V_{L1}$ or $Oc_i \geqq Oc_H$
"crowded state"⋯ $V_{L1} < V_i \leqq V_{L2}$ and
$Oc_i < Oc_H$
"free flow state"... $V_i > V_{L2}$,

provided that $V_{L1}$, $V_{L2}$, $Oc_H$ represent predetermined reference values. For example, the "congested" deciding speed $V_{L1}$ is set to 10 km/h. Further, a limited occupancy $Oc_H$ is set to 40%.

The vehicles are decided as being "congested" in the case where their speeds Vi are below a lower-limit reference speed $V_{L1}$ or the occupancy $Oc_i$ is below a limited occupancy $Oc_H$.

The congested extent thus decided is, together with the traffic accidents, etc., displayed on the road at an electric road sign board for instance as follows:

"(An accident occurs at an interval D-A-congested over △△km"

Further, at the driveway, etc., along the express highway, etc., a message indicating

"caution: congested at an A exit"

is displayed, for example, on the road at the electric road sign board.

Further, in the road traffic monitoring system, the length Li (km) of the above-mentioned interval i is known and the time taken for the vehicles to pass through the respective interval i is given by

$$Ti = Li/Vi$$

Thus, the requisite time taken for the vehicles on the road at a point-to-point interval can be calculated. It is possible to, for example, display

"congested: abt. △△ minutes taken for the vehicle to reach the A exit"

at the electric road sign board.

In this way, the road traffic control system informs two kinds of information

1) a congested extent
2) a requisite time taken for the vehicle up to a specific location to the driver in the running vehicle on the road.

This road traffic control system is applied to the loop highway in a large city. In the loop highway, there exist a drive way inhibited for the pedestrians from walking therealong and a general trunk road for the pedestrians to walk therealong. In either case, inner and outer lanes (paths) extend along the loop highway and the driver in a vehicle in any of these lanes on the highway can reach the same destination.

How to select any lane from one approach location on the loop-highway to reach the destination is decided generally based on the length of a distance to the destination.

In the loop highway extending across the large city, however, the vehicles are often congested and how to select any one of inner and outer lanes as a path to reach the destination in a short period of time is not frequently determined by the distance only up to the destination. The selection of any path to the destination often relies upon the extent to which the vehicles are congested on the respective paths.

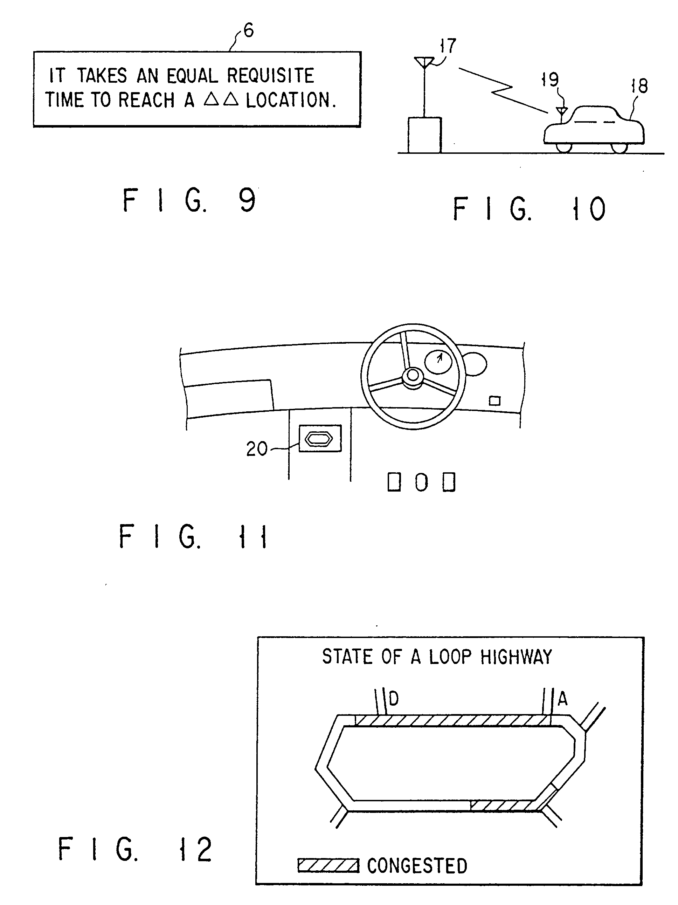

Thus, the congested interval or intervals in the loop highway are displayed, in red for instance, as a diagram on the electric road sign board at each approaching point to the loop highway, as shown in FIG. 12, thus informing, to the driver, the approaching vehicle to the loop highway.

From the congested state of vehicles on the electric road sign board the driver has judged it possible to reach the destination in a shorter period of time if he or she takes any of the inner or outer lane of the road route.

However, the display of the crowded state on the electric road sign board has not provided sufficient information for the driver to judge which the road route should better be taken to reach the destination.

In the case where there is almost no time difference between taking the inner or outer lane route to reach the destination it has been difficult for the driver familiar with the loop highway to rightly judge a requisite time taken, based on the congested state of vehicles as displayed in FIG. 12. Further, he or she not familiar with the loop highway has no proper procedure but a quick judgment to take which best to reach the destination in any selected road path in a short period of time.

Even if the shortest requisite time path to one location and its requisite time taken there are displayed on the respective approach location in the highway, it is not always true to match the displayed location to the driver's destination.

Since there is some limit to which characters can be displayed on the electric road sign board, only few drivers can adopt it as a base of reference on which he or she select it.

[Disclosure of the Invention]

It is accordingly the object of the present invention to provide a route guiding apparatus for a loop highway which, even if a destination is situated in any location in the loop highway, enables a driver to instantly grasp which is better to reach the destination in a short period of time along any specific one of inner and outer lanes and can provide an improved service to the driver on the loop highway and beforehand prevent any possible congested state of vehicles in the highway routes.

In order to achieve the above-mentioned object, there is provided a route guiding apparatus for a loop highway characterized by comprising

a plurality of traffic flow detecting means for detecting traffic flow data on vehicles moving along outer and inner lanes in a loop highway divided into a plurality of intervals;

time calculating means for calculating a requisite interval time taken for each vehicle to move past the respective interval along the inner and outer lanes from the respective traffic data detected by the traffic flow detecting means;

outer lane time sum calculating means for calculating an outer lane requisite time sum of those times taken for the vehicle to reach the respective interval along the outer lane from an approach location of the vehicle designated at the loop highway;

inner lane time sum detecting means for calculating an inner lane requisite time sum of those times for the vehicle to reach the respective interval along the inner lane from the approach location of the vehicle designated at the loop highway;

position deciding means for detecting an interval corresponding to a closest time between those of the respective outer and inner lane requisite time sums calculated by the respective time sum calculating means and for deciding an equal requisite time position in the detected interval; and

position informing means for outputting the equal requisite time position which is decided by the position deciding means to the approach location of the vehicle as an informing output.

In the route guiding apparatus thus constructed for the loop highway, traffic flow data is picked up at those intervals along the outer and inner lanes in the loop highway and calculated as a requisite interval time for each interval.

Where the vehicle takes an outer lane from the approach location, a respective outer lane requisite time sum is calculated over a range to the respective interval from the approach location. Similarly, where the vehicle takes an inner lane from the location, a respective inner lane requisite time sum is calculated over a range to the respective interval from the approach location.

Of those intervals, an interval where the outer and inner requisite time sums are equal to each other becomes an equal requisite time position, that is, an interval for the vehicle to be reached in a predetermined time interval along the outer and inner lanes from the approach location.

Stated in more detail, since there is not always an exact coincidence between the outer lane requisite time sum and the inner lane requisite time sum, the position corresponding to a closest interval between the outer lane requisite time sum and the inner lane requisite time sum is specified and decided as an equal requisite time position in the interval. And this equal requisite time position is informed to the driver moving in a vehicle at that location.

The driver can instantly judge any of the outer and inner lanes on the basis of on which side the driver's vehicle belongs from the equal requisite time position as a destination for which he or she is so informed.

[Brief Description of the Drawings]

FIG. 1 is a block diagram schematically showing a route guiding apparatus for a loop highway according to a first embodiment of the present invention;
FIG. 2 is a flow chart showing the operation of the first embodiment;
FIG. 3 is a view showing a display content on an electric road sign board mounted at one approach location in the first embodiment;
FIG. 4 is a view showing a display content at another approach location in the first embodiment;
FIG. 5 is a block diagram schematically showing a route guiding apparatus for a loop highway according to a second embodiment of the present invention;
FIG. 6 is a view showing a display content on an electric road sign board at an approach location in the second embodiment;
FIG. 7 is a block diagram schematically showing a route guiding apparatus for a loop highway according to a third embodiment of the present invention;
FIG. 8 is a view showing a display content on an electric road sign board at an approach point in the third embodiment;
FIG. 9 is a view showing a display content on an electric road sign board at an approach location in a fourth embodiment of the present invention;
FIG. 10 is a view showing a position informing procedure in a fifth embodiment of the present invention;
FIG. 11 is a view showing a position informing procedure in a sixth embodiment of the present invention; and
FIG. 12 is a view showing a display content on an electric road sign board adopted in a conventional road control system.

[Best Mode of Carrying Out the Invention]

Respective embodiments of the present invention will be explained below with reference to the accompanying drawings.

(First Embodiment)

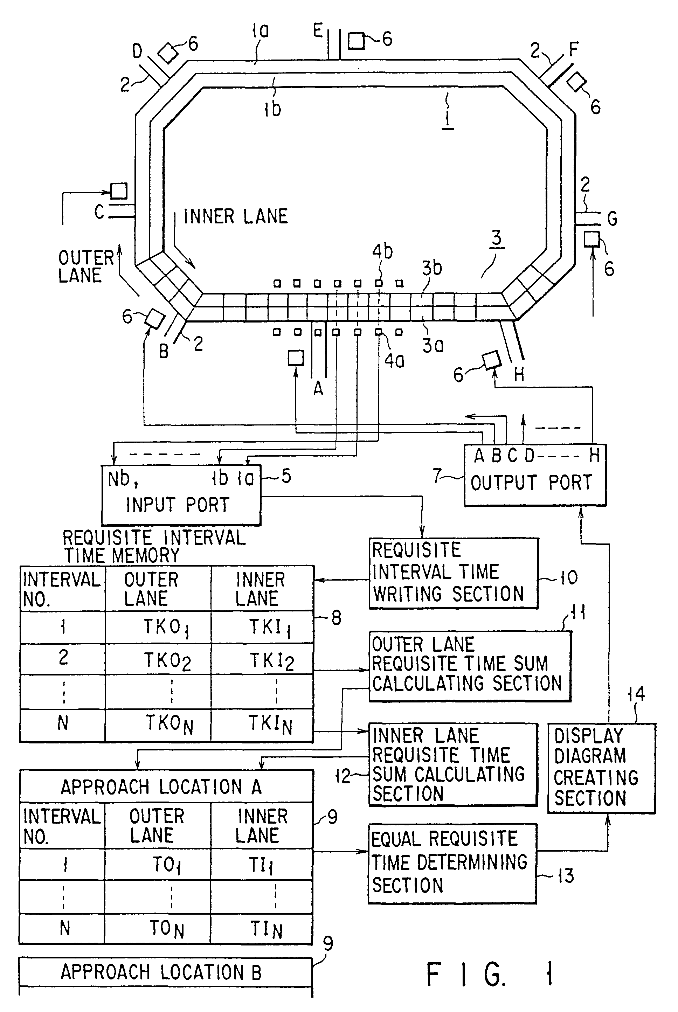

FIG. 1 is a block diagram showing a schematic arrangement of a route guidance apparatus, for a loop highway, according to a first embodiment of the present invention.

A loop highway 1 to be monitored by the route guidance apparatus according to the present invention is, for example, a driveway divided into an outer lane 1a and an inner lane 1b. In the loop highway 1 utilized for the present embodiment, when a vehicle once approaches either one of the lanes 1a and 1b, it cannot move into the other lane once it moves out of the loop highway 1. In the loop highway 1 there is a total of eight approach locations and exit/entry sites 2 as indicated by A to H.

Let it be assumed that, in the embodiment, the respective vehicle runs along the left-side lane in a travelling direction.

The loop highway 1 is divided into N numbers of intervals 3 of, for example, 500m or 1 km in length. Vehicle sensors 4a and 4b are each positioned, respectively, in a corresponding one of the inner and outer lane intervals into which the respective intervals 3 are each divided. It is to be noted that the respective interval length need not always exactly be matched to 500m or 1 km and that it is only necessary to exactly measure each interval length $L_{ki}$ (km) per se.

The respective vehicle sensors 4a, 4b measure the speed of the vehicle running along the interval i ($i = 1, 2, \cdots$: an index representing the respective intervals 3), an amount of vehicle traffic per unit time and occupancy, for example, in units of one minute. The respective vehicle sensors 4a, 4b calculate a moving average, that is, an average of five values corresponding to front/back five minutes measured in units of one minute with respect to a present time.

Therefore, the respective vehicle sensors 4a, 4b calculate the speed $V_{ki}$ (km/h) of the vehicles, their traffic amounts $Q_{ki}$ (number of vehicles) per unit time and their occupancies $Oc_{ki}$ (%) which are subjected to a moving average in units of one minute.

And the respective vehicle sensor 4a, 4b calculate, in accordance with the following conditions, the requisite interval time $T_{ki}$ taken for the vehicle to move past the interval concerned.

(1) a "congested" time

$$V_{ki} \leqq V_{L1} \text{ or } Oc_{ki} \geqq Oc_H$$

the "congested" judging speed

$$V_{L1} = 10 \text{ km/h}$$

the limited occupancy

$$Oc_H = 40\%$$

the requisite interval time $= T_{ki} = L_{ki}/V_{L1}$

In the "congested" time, since the respective vehicles repeat "stop" and "run" states for predetermined time intervals of, for example, 3 to 7 minutes and if, for example, the speed measured in the "stop" state is used, then the requisite interval time $T_{ki}$ becomes infinite. In order to initially prevent such an inconvenience, the "congested state" judging speed $V_{L1}$ of, for example, 10 km/h is adopted.

(2) " a small traffic amount" time

$$Q_{ki} < Q_L$$

and

$$Oc_{ki} < Oc_L$$

the lower-limit traffic amount

$$Q_L = 0$$

the lower-limit occupancy

$$Oc_L = 0$$

the requisite interval time taken $= T_{ki} = L_{ki}/V_{RH}$

If the traffic amount is extremely low in the nighttime, etc., there is a high possibility that a speed $V_{ki}$ exceeding the legal highest limit of speed $V_{RH}$, is detected. By adopting the legal highest limit of speed, $V_{RH}$, any inconvenience for an extremely short requisite interval time $T_{ki}$ to be calculated is beforehand avoided.

(3) "a free flow" time

$$V_{L1} \leqq V_{ki} < V_{RH}$$

the requisite interval time

$$T_{ki} = L_{ki}/V_{ki}$$

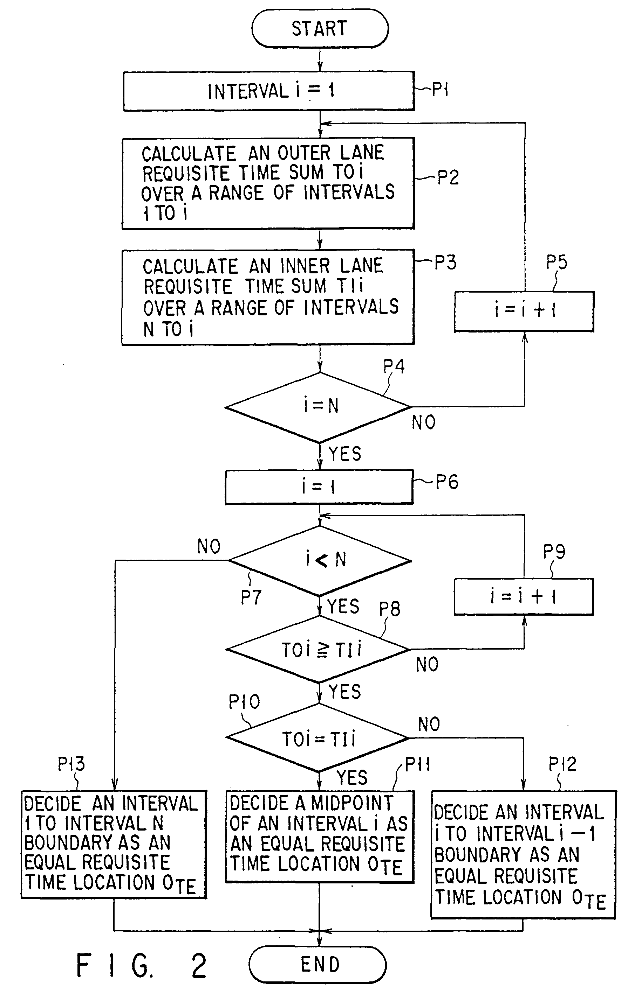

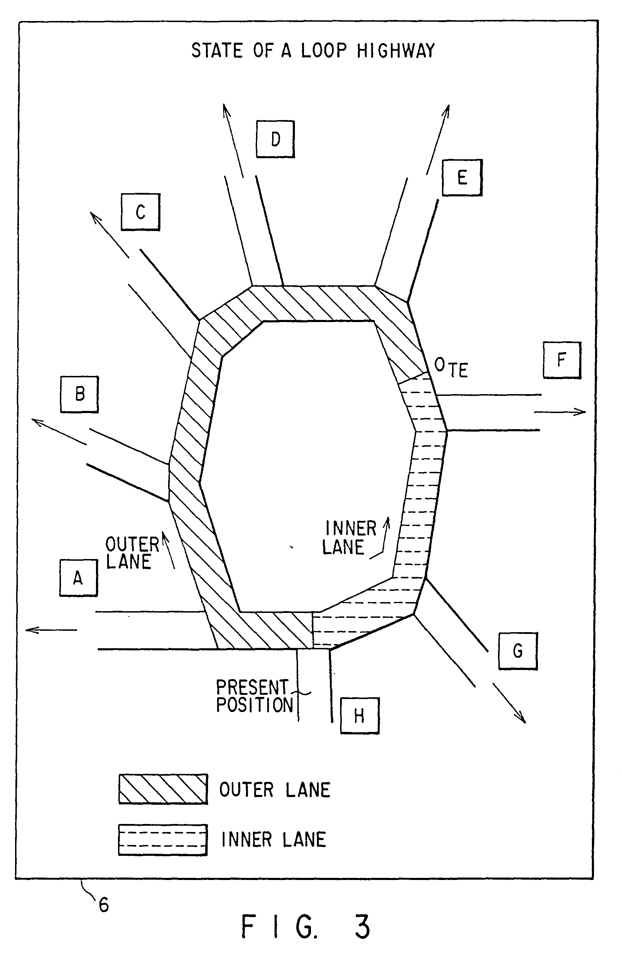

The respective requisite interval times $T_{ki}$ in the respective intervals 3a and 3b of the outer and inner lanes 1a and 1b output from the corresponding vehicle sensors 4a and 4b are sent to an input port 5 of a host computer in the road control center.
In the loop highway, an electric road sign board 6 as shown, for example, in FIG. 3 is mounted above the approach sections at the exit/entry sites 2 as indicated by A to H. In the electric road sign board 6, a display signal is individually displayed as an output signal from an output port 7 of the host computer in the road control center.

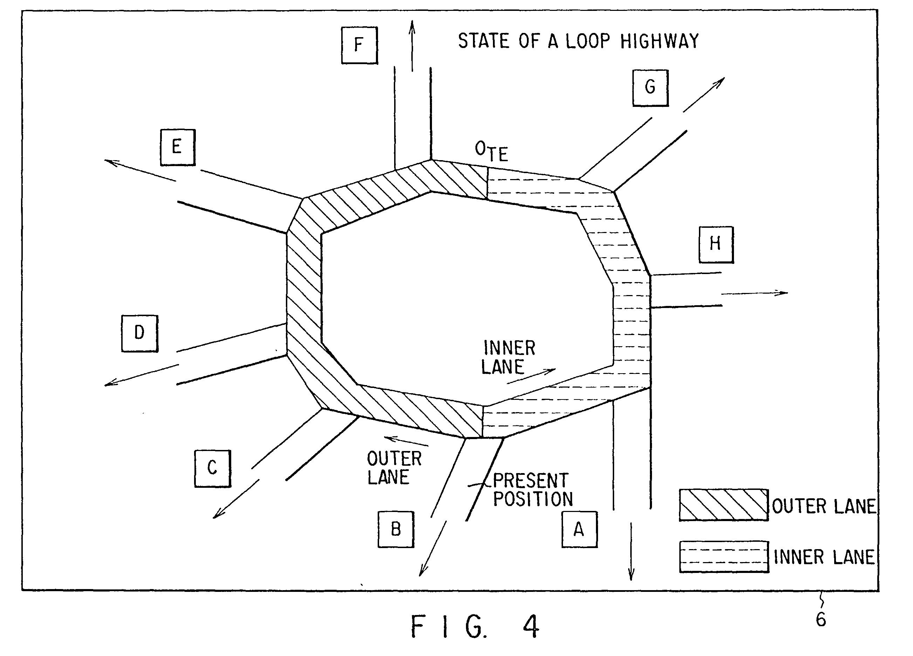

FIG. 3 shows the electric road sign board 6 disposed at the exit/entry site 2 as indicated by H and FIG. 4 shows the electric road sign board 6 at the exit/entry site 2 as indicated by B. On the electric road sign board 6 disposed at the exit/entry site a diagram of the loop highway 1 is displayed such that the driver's exit/entry site 2 is located in a display screen at a lower middle position. Further, the "present vehicle position" is displayed, as a message, near the exit/entry site of the driver.
The host computer includes a requisite interval time memory 8 and a total of eight requisite time sum memories 9 corresponding to the exit/entry site 2 positions as indicated by A to H.
Further, the host computer includes, in a software format in an application program, a requisite interval time writing section 10, an outer lane requisite time sum calculating section 11, an inner lane requisite time sum calculating section 12, a uniform requisite time position deciding section 13 and a display diagram creating section 14.
The requisite interval time memory 8 includes an area for storing a requisite interval time TKOi taken for the vehicle to move past the respective intervals i in the outer lane intervals 3a of the N number of intervals 3 and an area for storing a requisite interval time TKIi taken for the vehicle to move past the respective interval i in the inner lane intervals thereof.
Further, the respective requisite time sum memory 9 stores a respective outer lane requisite time sum TOi taken for the vehicle to move in the outer lane path from a designated exit/entry site to the respective interval i for each of the first to the N-th intervals and a respective inner line requisite time sum TIi taken for the vehicle to move in the inner lane path from a designated exit/entry site to the respective interval i.
In the numbers of the respective first to N-th intervals, those intervals 3a and 3b located adjacent the outer lane path side (left direction side) of the exit/entry site at the approach section designated by the requisite time sum memory 9 correspond to No. 1 and those intervals 3a and 3b located adjacent the inner lane path side (right direction side) of the exit/entry site designated correspond to No. N.
The requisite interval time writing section 10 allows the requisite interval times TKOi and TKIi of the respective intervals 3a and 3b which are input from the vehicle sensors 4a and 4b in a predetermined time interval of, for example, one minute to be stored in the requisite interval time memory 8 at those areas corresponding to the intervals 3a and 3b. Therefore, the respective requisite time intervals TKOi and TKIi stored in the requisite interval time memory 8 are updated to new values for each minute.
Further, the outer lane requisite time sum calculating section 10, inner lane requisite time sum calculating section 11 and equal requisite time position deciding section 12 execute calculation processing on the requisite time sums TOi, TIi and decision processing on an equal requisite time position $O_{TE}$, along a FIG. 2 flow chart, in a per-minute timing in which new data is written in the requisite interval time memory 8.

The calculation processing on the requisite time sums TOi, Tli and decision processing on the equal requisite time position $O_{TE}$ are performed, for each exit/entry site (a total of eight places as indicated by A to H), for example, in a parallel way or in a way shifted for a predetermined time.

The decision processing on the equal requisite time position $O_{TE}$ seen at one exit/entry site of a total of eight exit/entry sites will be explained below with reference to the flow chart in FIG. 2.

At the start of a flow in FIG. 2, the index i of the intervals 3a, 3b adjacent the left side of a designated exit/entry site is initialized to 1 (i = 1) at step P1 (program step). In this case, the index i is increased in an outer lane direction. Therefore, an index i of the intervals 3a, 3b adjacent the right side thereof corresponds to a final value N (i = N).

In P2, an outer lane requisite time sum TOi representing a requisite time from the outer lane interval 3a (i = 1) adjacent the left side of the designated exit/entry site to an i-th interval along the outer lane path is calculated by an equation below.

$$TO_i = TKO_1 + TKO_2 + TKO_3 + \cdots \cdots TKO_i$$

Similarly, at step P3, an inner lane requisite time sum Tli representing a requisite time from an inner interval 3b (i = N) adjacent the right side of the designated exit/entry site to an i-th interval 3b along the inner lane path is calculated by an equation below.

$$TI_i = TKI_N + TKI_{N-1} + TKO_{N-2} + \cdots TKI_i$$

When the outer lane requisite time sum TOi and inner lane requite time sum Tli are calculated, a result is written in an i-th area in the requisite time sum memory 9 corresponding to the designated exit/entry site.

Where, at P4, the interval index i does not reach the final value N, the index i is updated (P5) and control goes back to P2, calculating an outer lane requisite time sum TOi up to an interval 3a designated by the updated index i.

Where, at P4, the interval index i reaches the final value N, all the requisite time sums TOi, Tli have been written in the requisite time sum memory 9 at the designated exit/entry site.

Then control goes to P6, starting the equal requisite time position deciding section 13 and starting decision processing on the equal requisite time position $O_{TE}$ for the designated exit/entry site.

At step P6, the index i counted from the interval 3 adjacent the right side of the designated exit/entry site is initialized and, at P7, it is conceived that the index i does not reach the final value N. Thereafter, the outer and inner lane requisite time sums TOi and Tli in the requisite time sum memory 9 are read out and checking is made to see whether or not the outer lane requisite time sum TOi is greater than, and equal to, the inner lane requisite time sum Tli (P8).

If the outer lane requisite time sum TOi is less than the inner requisite time sum Tli, the index i is updated (P9) and checking is made on the respective values TOi, Tli at the next areas of the requisite time sum memory 9.

When, at P8, the outer lane requisite time sum TOi is greater than, or equal to, the inner lane requisite time sum Tli, checking is made, at P10, to see whether or not the outer lane requisite time sum TOi is equal to the inner lane requisite time sum Tli. When it is equal to the inner lane requisite sum, a midpoint of an interval designated by the present index is determined as an equal requisite time position $O_{TE}$.

Further, if, at P10, the outer lane requisite time sum TOi exceeds the inner lane requisite sum Tli, control goes to P12 and a boundary point between the interval 3 designated by the present index i and the interval 3 designated by an index (i-1) is determined as being an equal requisite time position $O_{TE}$.

When, at P7, the index i reaches the final value N, a boundary point between the first interval 3 adjacent the left side of the designated exit/entry site and the N-th interval 3 adjacent the right side is decided as being an equal requisite time position $O_{TE}$.

When the equal requisite time position $O_{TE}$ is decided, the decided equal requisite time position $O_{TE}$ is sent to the next display diagram creating section 14. In the display diagram creating section 14, a respective whole diagram corresponding to the loop highway 1 is initially stored/held such that, as set out above, a driver's exit/entry site is positioned at a lower middle at each exit/entry site as indicated by A to H. In this embodiment, a total of eight loop highways 1 is stored as a whole diagram.

The display diagram creating section 14 marks the input equal requisite time position $O_{TE}$ in the respective whole diagram corresponding to the respective exit/entry site in the loop highway. Further, the display diagram creating section 14 displays, in yellow color for instance, a path from the designated exit/entry site (present site) to the equal requisite time position $O_{TE}$ along the outer lane route (left lane route) and, in blue color for instance, a path from the designated exit/entry site (present site) to the equal requisite time position $O_{TE}$ along the inner lane route (right lane route).

The display diagram creating section 14 enables the whole diagram of the loop highway 1 with the equal requisite time position $O_{TE}$ and respective different color paths created therein to be output to the electric road sign board 6, as shown in FIG. 3, at the designated exit/entry site through the output port 7. On the electric road sign board 6 indicating the exit/entry site (as indicated by H) as the present location (designated position), it is possible to confirm the equal requisite time position $O_{TE}$ as being a mid-position between the exit/entry site as indicated by E and the exit/entry site as indicated by F.

The display content of the electric road sign board 6 is updated to a most recent value for each minute.

The calculation processing for calculating the equal requisite time position $O_{TE}$ for those exit/entry sites as indicated by A to G, other than H, and display processing for displaying, in different color, the equal requisite time position $O_{TE}$ on the electric road sign board at the respective exit/entry site and the respective paths to the equal requisite time position $O_{TE}$ are carried out in the same executing procedure as set out above.

FIG. 4 is a view showing a display content on the electric road sign board 6 at the exit/entry site. In the electric road sign board 6 where the exit/entry site as indicated by B is displayed as a present location (designated position), it is possible to confirm that the equal requisite time position $O_{TE}$ is present at a mid-position between the exit/entry site as indicated by F and the exit/entry site as indicated by G.

In the route guiding apparatus thus constructed for the loop highway, when the driver drives from the respective exit/entry site in the loop highway 1 toward the destination along the loop highway, an equal requisite time position $O_{TE}$ at which the time taken for the driver to reach the designation along the outer lane route from this exit/entry site 2 and the time along the inner lane route are equal to each other is displayed, as a whole diagram of the loop highway 1, on the electric road sign board 6 at the exit/entry site 2 as shown in FIG. 3 or 4.

Further, the route from the exit/entry site 2 (present location) to the equal requisite time position $O_{TE}$ along the outer lane and the route along the inner lane are displayed, as a diagram, in different color, such as "yellow" or "blue".

Depending upon whether the destination belongs to the yellow-colored or the blue-colored route, the driver can quickly judge the outer lane or inner lane shortest time route to the destination.

In the display content as shown, for example, in FIG. 3, the driver can instantly understand that, in order to move from the exit/entry site as indicated by H to the exit/entry site as indicated by E (destination), he or she can reach the destination in a shorter period of time by taking the outer lane 1a along A, B, C and D than the inner lane 1b along G and F.

Since the respective driver has his or her route guided in a way to avoid any congested route, the congested extent of vehicles on the loop highway 1 is beforehand prevented from being further aggravated, so that the effective use of the loop highway can be further achieved.

The present invention is not restricted to the above-mentioned first embodiment. The respective vehicle sensors 4a, 4b of the first embodiment calculate the speed $V_{ki}$ (km/h), traffic amount $Q_{ki}$ per unit time (the number of vehicles) and occupancy $Oc_{ki}$ (%) of vehicles and the requisite interval-to-interval time $T_{ki}$ was measured based thereon. However, it may be possible to measure the vehicle's speed $V_{ki}$ only and calculate the requisite interval-to-interval time $T_{ki}$ from the speed $V_{ki}$ and interval length $L_{ki}$.

(Second Embodiment)

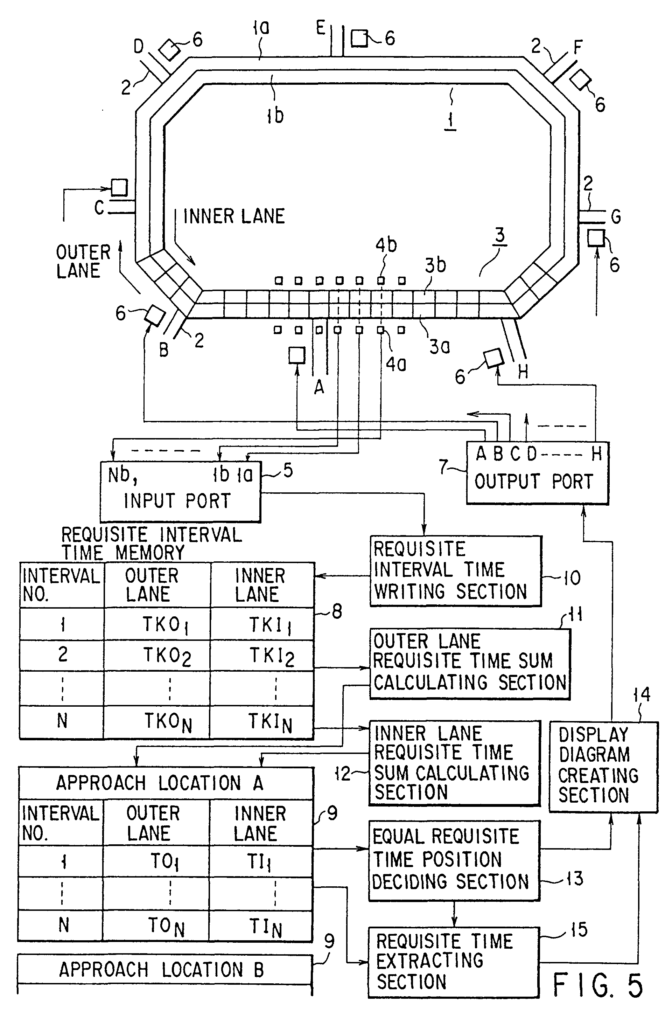

FIG. 5 is a block diagram schematically showing an arrangement of a route guiding apparatus, for a loop highway, according to a second embodiment of the present invention. The same reference numerals are employed to designate parts or elements corresponding to those shown in FIG. 1 and, therefore, any overlapped portions between the two are omitted.

In the second embodiment, a requisite time extracting section 15 is provided. From respective N numbers of requisite time sums $TO_1$ to $TO_N$ and $TI_1$ to $TI_N$ for outer and inner lane routes which are stored in eight requisite time sum memories 9 corresponding to respective exit/entry sites as indicated by A to H, the requisite time extracting section 15 extract below-described requisite time sums corresponding to intervals 3a, 3b in each of the respective exit/entry sites as indicated by A to H:

outer lane requisite time sum: $TO_A$, $TO_B$, $\cdots$ $TO_H$
inner lane requisite time sum: $TI_A$, $TI_B$, $\cdots$ $TI_H$

Further, the requisite time extracting section 15 extracts a requisite time sum $T_{TE}$ of those intervals corresponding to an equal requisite time position $O_{TE}$.

Next, the requisite time extracting section 15 selects, from the extracted outer lane requisite time sum $TO_A \cdots TO_H$, an outer lane requisite sum $T_A$, $T_B$, $\cdots$ corresponding to those exit/entry sites present in a route to an equal requisite time position $O_{TE}$ already decided along an outer lane path.

Similarly, the requisite time extracting section 15 selects, from the extracted inner lane requisite time sum $TI_A \cdots TI_H$, an inner lane requisite time sum $T_G$, $T_F$, $\cdots$ corresponding to those exit/entry sites present in a route to the equal requisite time position $O_{TE}$ along the inner lane path.

The requisite time extracting section 15 sends the selected requisite time sums $T_A$, $T_B$, $\cdots$, $T_F$, $T_G$ to a display diagram creating section 14.

The display diagram creating section 14 creates, as in the case of the first embodiment, the loop highway, an equal requisite time position $O_{TE}$ and different color paths and marks the earlier-selected requisite time sums $T_A$, $T_B$, $\cdots$, $T_F$, $T_G$ and requisite time sum $T_{TE}$ in the vicinity of the respective exit/entry sites.

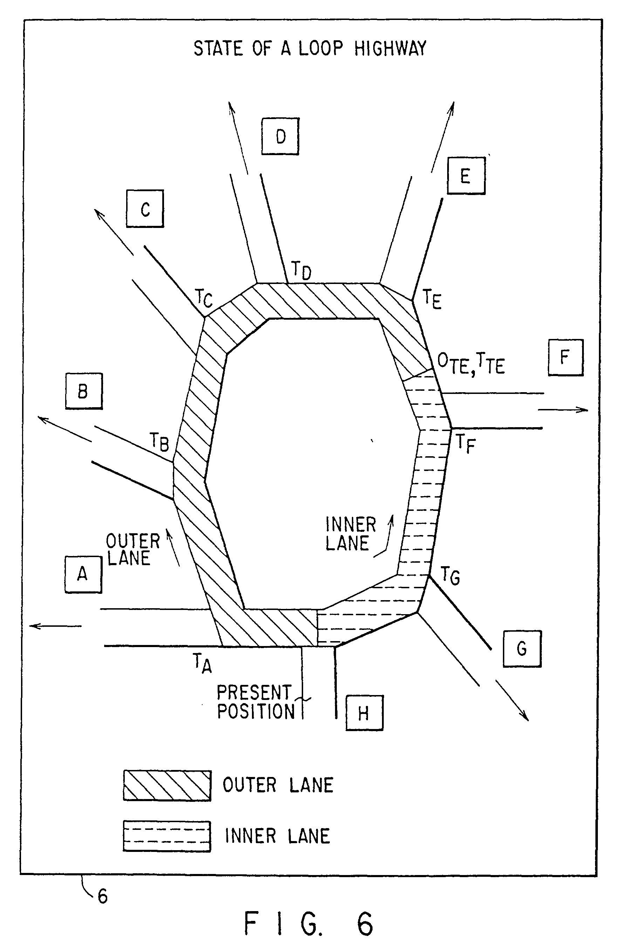

As a result, an electric road sign board 6 simultaneously displays, as shown in FIG. 6, not only the equal requisite time position $O_{TE}$ but also the equal requisite time sum $T_{TE}$ and requisite time sums $T_A$, $T_B$, ⋯, $T_F$, $T_G$ allowing the reaching of the respective exit/entry sites in the shortest time period.

Even the route guiding apparatus thus arranged ensures the same advantage as in the first embodiment. Further, the driver can quickly grasp the shortest requisite time to reach a destination exit/entry site, on the electric road sign board 6.

(Third Embodiment)

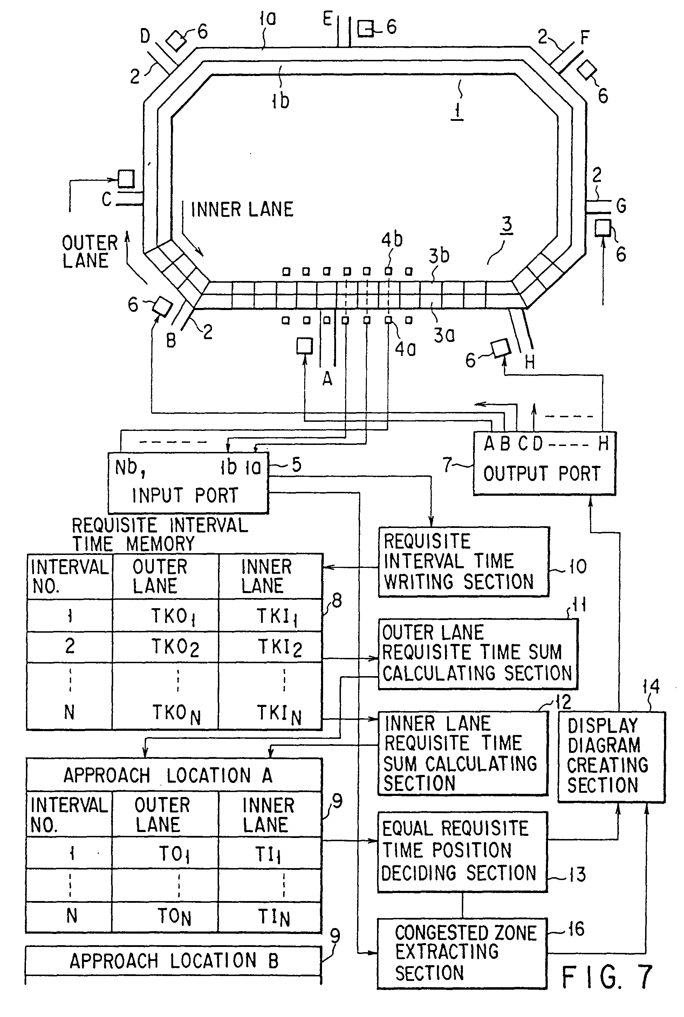

FIG. 7 is a block diagram schematically showing a route guiding apparatus, for a loop highway, according to a third embodiment of the present embodiment. The same reference numerals are employed to designate parts or elements corresponding to those shown in FIG. 1 and any overlapped portions between the two are omitted.

In the second embodiment, a congested interval extracting section 16 is provided. Further, vehicle sensors 4a and 4b provided in corresponding outer and inner lane intervals 3a and 3b in the respective interval 3 in the case of the second embodiment send a requisite interval time $T_{ki}$ of the interval concerned to an input port 5 in a host computer and a congested extent of vehicles in that interval also to the input port 5.

The congested interval extracting section 16 extracts, via the input port 5 from an N number of outer lane intervals 3a and of inner lane intervals 3b, those intervals marked as a "congested" and decides those congested intervals 18 in the outer and inner lane 1a and 1b. The congested interval extracting section 16 sends those decided crowded intervals 18 to a display diagram creating section 14.

Like the first embodiment, the display diagram creating section 14 creates, as a diagram, a loop highway 1, an equal requisite time position $O_{TE}$ and different color routes, as well as a loop-like flow diagram 17 in the different color routes, and creates, as the flow diagram 17, those congested intervals 18 on the outer lane 1a and inner lane 1b.

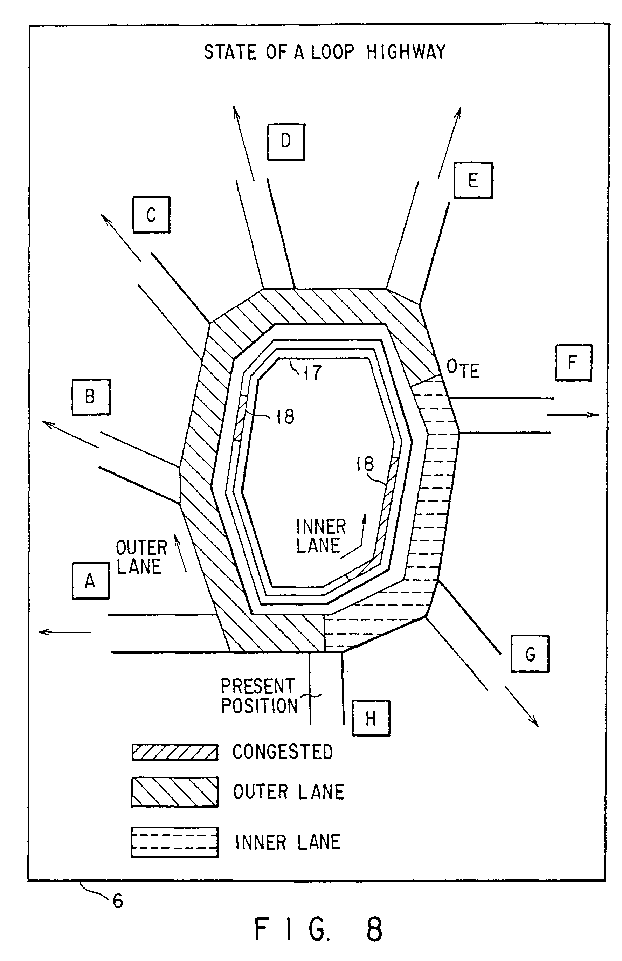

As a result, not only the equal requisite time position $O_{TE}$ but also the respective congested intervals are displayed, at a time, on the electric road sign board 6 as shown in FIG. 8.

The route guiding apparatus of the second embodiment thus arranged also ensures the same effect as the first embodiment. Further, the driver can instantly grasps the congested state on the electric road sign board to reach a destination exit/entry site.

(Fourth Embodiment)

FIG. 9 is a view showing the display contents of an electric road sign board 6 for use in a route guiding apparatus, for a loop highway, according to a fourth embodiment of the present invention.

That is, in the first embodiment, the decided equal requisite time position $O_{TE}$ is displayed on the whole diagram of the loop highway 1 as shown in FIG. 3. Where it is not possible to set any large-scale electric road sign board 6, a message representing

"It takes an equal requisite time to reach a △△ location."

can be displayed on a smaller electric road sign board 6 as in the fourth embodiment as shown in FIG. 9.

(Fifth Embodiment)

In a road guiding apparatus according to a fifth embodiment of the present embodiment, an antenna 17 is installed, in place of an electric road sign board 6, near a respective exit/entry site 2 on a loop highway 1 as shown in FIG. 10. In this case, it is to be noted that a power level of a radio wave is so set as to prevent a crosstalk from being caused by respective radio waves radiating from antennas 17 at those exit/entry sites.

And to the exit/entry site, the display content representing

"It takes an equal requisite time to reach a △△ location." is radiated, as road information, from the antenna 17 installed at the each exit/entry site. A vehicle 18 moving past the exit/entry site receives a radio wave by an antenna 19 of a radio set there. The driver can confirm the above-mentioned information through a radio set built in the vehicle.

(Sixth Embodiment)

In the sixth embodiment of the present invention, an antenna is installed near a respective exit/entry site in a loop highway 1 as in the fifth embodiment shown in FIG. 10. The display content of an electric road sign board 6 at an exit/entry site concerned as shown in FIG. 3 is radiated as a radio wave from the antenna. A vehicle moving past the exit/entry site receives a corresponding radio wave via the antenna. Received image information is displayed on a display screen 20 of a vehicle navigation system installed near a driver's seat in the vehicle as shown in FIG. 11.

Therefore, the driver can confirm, on the display screen, the same information as the display content on the electric road sign board 6 of the first embodiment.

In the route guiding apparatus for the loop highway according to the present invention as explained above, an equal requisite time position $O_{TE}$ is decided to reach a destination from a location of an approach to the loop highway 1 along an outer lane path or an inner lane path and is informed to the driver.

Even in any location on the loop highway 1, therefore, the driver can instantly grasp the shortest time route to reach the destination along either of the inner and outer lane routes. By doing so, it is possible to provide an improved service to the driver driving on the loop highway 1 and also to beforehand prevent the situations in which the lanes are further congested with vehicles.

**Claims**

1. A route guiding apparatus for a loop highway **characterized by** comprising

a plurality of traffic flow detecting means (4a, 4b) for detecting traffic flow data on vehicles moving along outer and inner lanes in a loop highway (1) divided into a plurality of intervals (3);
time calculating means (4a, 4b) for calculating a requisite interval time taken for each vehicle to move past the respective interval along the inner and outer lanes from the respective traffic data detected by the traffic flow detecting means;
outer lane time sum calculating means (11) for calculating an outer lane requisite time sum of those times taken for the vehicle to reach the respective interval along the outer lane from an approach location of the vehicle designated at the loop highway;
inner lane time sum calculating means (12) for calculating an inner lane requisite time sum of those times for the vehicle to reach the respective interval along the inner lane from the approach location of the vehicle designated at the loop highway;
position deciding means (13) for detecting an interval corresponding to a closest time between those of the respective outer and inner lane requisite time sums calculated by the respective time sum calculating means and for deciding an equal requisite time position in the detected interval; and
position informing means (14, 6) for outputting the equal requisite time position which is decided by the position deciding means to the approach location of the vehicle as an informing output.

2. The route guiding apparatus according to claim 1, **characterized in that** the traffic flow data detected by the respective traffic flow detecting means corresponds to an average speed of the vehicles moving past the interval where the traffic flow detecting means are located and the time calculating means finds a requisite interval time by dividing an initially measured length of the interval by the detected speed.

3. The route guiding apparatus according to claim 1, **characterized in that** the traffic flow data detected by the respective traffic flow detecting means comprises an average speed of the vehicles moving past the interval where the traffic flow detecting means are located, the number of the vehicles moved past that interval in a unit time, and an occupancy showing a ratio, to the unit time, of a vehicle detection time for detecting the vehicle in the unit time.

4. The route guiding apparatus according to claim 3, **characterized in that** the speed, the number of vehicles and the occupancy detected by the respective traffic flow detecting means are values obtained by time-averaging those values, over a plurality of periods, which are measured for a predetermined period and measured over a plurality of adjacent periods.

5. The route guiding apparatus according to claim 3, **characterized in that** the time calculating means comprises congested extent deciding means for classifying, into three states, corresponding to a congested, a small traffic amount and a free flow state, the state of the flow of the vehicles past the respective interval on the basis of the speed, number of vehicles and occupancy averaged by the traffic flow detecting means and calculating means for calculating a respective requisite interval time with the use of a calculation equation beforehand determined for each flow state of each vehicle decided by the congested extent deciding means.

6. The route guiding apparatus according to claim 1, **characterized by** the time extracting means for extracting, as an equal requisite time, from outer and inner lane requisite time sums for those respective intervals which are calculated by the respective time sum calculating means, either one of those outer and inner lane requisite time sums to which an equal requisite time position decided by the position deciding means belongs, and in which the position informing means provides the equal requisite time extracted by the time extracting means to the approach location of the vehicle as an informing output.

7. The route guiding apparatus according to claim 1, **characterized by** time sum extracting means (15) for extracting, from outer and inner requisite time sums for those respective intervals which are calculated by the time sum calculating means, outer and inner lane requisite time sums for the interval to which the respective approach location of the vehicle in the loop highway belong and in which the position informing means provides the outer and inner lane requisite time sums extracted by the time sum extracting means to the approach location of the vehicle as an informing output.

8. The route guiding apparatus according to claim 1, **characterized by** further comprising time sum extracting means (15) for extracting, from inner and outer lane requisite time sums for those intervals calculated by the respective time sum calculating means, outer and inner lane requisite time sums for the interval to which the respective approach location in the loop highway belongs, outer lane time sum selecting means (15) for selecting, from the outer lane requisite time sums extracted by the time sum extracting means, an outer lane requisite time sum corresponding to the respective approach location to reach the equal requisite time location along the outer lane, inner lane time sum selecting means (15) for selecting, from the inner lane requisite time sum extracted by the time sum extracting means, an inner lane requisite time sum corresponding to the respective approach location to reach the equal requisite time location along the inner lane, in which the position informing means provides the outer and inner requisite time sums selected by the respective time sum selecting means to the approach location of the vehicle.

9. The route guiding apparatus according to claim 5, **characterized by** interval extracting means (16) for extracting the respective interval decided by the congested extent deciding means as being congested and congested interval informing means for providing the crowded interval extracted by the interval extracting means to the approach location of the vehicle as an informing output.

10. The route guiding apparatus according to claim 1, **characterized in that** the position informing means displays, as a diagram on a display device at the approach location, a path leading to the equal requisite time position along the outer lane and a path leading to the equal requisite time position along the inner lane.

11. The route guiding apparatus according to claim 1, **characterized in that** the position informing means displays, in different colors on an electric road sign board at the approach location, a path leading to the equal requisite time position along the outer lane and a path leading to the equal requisite time position along the inner lane.

12. The route guiding apparatus according to claim 1, **characterized in that** the position informing means outputs information of the decided equal requisite time position, as a radio wave, to the vehicle moving past the approach location by an antenna at the approach location.

13. The route guiding apparatus according to claim 1, **characterized in that** the position informing means comprises radio wave outputting means (17) for outputting image information containing a route leading to the equal requisite time position along an outer lane and a path leading to the equal requisite time position along the inner lane, as a radio wave, to the vehicle moving past the respective approach location by an antenna located at the approach location and an image receiving device (20), mounted in the respective vehicle, for receiving the image information output as a radio wave and for outputting the information to the vehicle on a display.

**Patentansprüche**

1. Wegführungsvorrichtung für eine Ringstraße **gekennzeichnet durch**

eine Mehrzahl von Verkehrsflußerfassungsmitteln (4a, 4b) zum Erfassen von Verkehrsflußdaten über Fahrzeuge, die sich entlang Innen- und Außenspuren in einer Ringstraße (1) bewegen, die in eine Mehrzahl von Intervallen (3) aufgeteilt ist;
Zeitberechnungsmittel (4a, 4b) zum Berechnen einer erforderlichen Intervallzeit, die von jedem Fahrzeug genommen wird, um sich **durch** das jeweilige Intervall entlang der Innen- und Außenspuren zu bewegen, aus den von dem Verkehrsflußerfassungsmittel erfaßten jeweiligen Verkehrsdaten;
Außenspur-Zeitsummen-Berechnungsmittel (11) zum Berechnen einer erforderlichen Außenspur-Zeitsumme derjenigen für das dem Fahrzeug genommenen Zeiten, um das jeweilige Intervall entlang der Außenspur von einer an der Ringstraße **gekennzeichneten** Fahrzeug-Zufahrtsposition zu erreichen;
Innenspur-Zeitsummen-Berechnungsmittel (12) zum Berechnen einer erforderlichen Innenspur-Zeitsumme derjenigen Zeiten für das Fahrzeug, um das jeweilige Intervall entlang der Innenspur von einer an der Ringstraße **gekennzeichneten** Fahrzeug-Zufahrtsposition zu erreichen;
Positionsentscheidungsmittel (13) zum Erfassen eines Intervalls, das einer nächsten Zeit zwischen derjenigen der jeweiligen von dem jeweiligen Zeitsummenberechnungsmittel berechneten erforderlichen Außen- und Innenspur-Zeitsummen entspricht, und zum Entscheiden einer Position der gleichen erforderlichen Zeit in dem erfaßten Intervall; und
Positionsinformationsmittel (14, 6) zum Ausgeben der Position der gleichen erforderlichen Zeit, die von dem Positionsentscheidungsmittel an der Zufahrtsposition des Fahrzeugs als eine Informationsausgabe entschieden wird.

**2.** Wegführungsvorrichtung gemäß Anspruch 1, **dadurch gekennzeichnet, daß** die von dem jeweiligen Verkehrsflußerfassungsmittel erfaßten Verkehrsflußdaten einer Durchschnittsgeschwindigkeit der sich durch das Intervall bewegenden Fahrzeuge entspricht, wo die Verkehrsflußerfassungsmittel positioniert sind, und das Zeitberechnungsmittel eine erforderliche Intervallzeit durch Teilen einer anfangs gemessenen Länge des Intervalls durch die erfaßte Geschwindigkeit findet.

**3.** Wegführungsvorrichtung gemäß Anspruch 1, **dadurch gekennzeichnet, daß** die von dem jeweiligen Verkehrsflußerfassungsmittel erfaßten Verkehrsflußdaten umfassen: eine Durchschnittsgeschwindigkeit der sich durch das Intervall bewegenden Fahrzeuge, wo die Verkehrsflußerfassungsmittel positioniert sind, die Anzahl der sich durch dieses Intervall in einer Zeiteinheit bewegenden Fahrzeuge und eine Belegung, die ein Verhältnis einer Fahrzeugerfassungszeit zum Erfassen des Fahrzeugs in der Zeiteinheit zu der Zeiteinheit zeigt.

**4.** Wegführungsvorrichtung gemäß Anspruch 3, **dadurch gekennzeichnet, daß** die von dem jeweiligen Verkehrsflußerfassungsmittel erfaßte Geschwindigkeit, die Anzahl der Fahrzeuge und die Belegung Werte sind, die durch Zeitmittelung dieser Werte über mehrere Zeitspannen erhalten werden, die für eine vorbestimmte Zeitspanne und über mehrere benachbarte Zeitspannen gemessen werden.

**5.** Wegführungsvorrichtung gemäß Anspruch 3, **dadurch gekennzeichnet, daß** das Zeitberechnungsmittel umfaßt: Stauausmaßentscheidungsmittel zum Klassifizieren in drei Zuständen, die einem gestauten, einem kleinem Verkehrsaufkommen und einem Freien-Fluß-Zustand entsprechen, des Zustands des Flusses der Fahrzeuge durch das jeweilige Intervall auf der Grundlage der Geschwindigkeit, der Anzahl der Fahrzeuge und der von dem Verkehrsflußerfassungsmittel gemittelten Belegung und Berechnungsmittel zum Berechnen einer jeweiligen erforderlichen Intervallzeit mit einer vorher für jeden Flußzustand jedes Fahrzeugs bestimmtem Berechnungsgleichung, die von dem Stauausmaßentscheidungsmittel entschieden wird.

**6.** Wegführungsvorrichtung gemäß Anspruch 1, **gekennzeichnet durch** das Zeitextrahierungsmittel zum Extrahieren, als eine gleiche erforderliche Zeit, aus erforderlichen Außen- und Innenspur-Zeitsummen für diejenigen jeweiligen Intervalle, die von dem jeweiligen Zeitsummenberechnungsmittel berechnet werden, einer dieser erforderlichen Außen- und Innenspur-Zeitsummen, zu der eine von dem Positionsentscheidungsmittel entschiedene Position der gleichen erforderlichen Zeit gehört, und bei der das Positionsinformationsmittel die von dem Zeitextrahierungsmittel extrahierte gleiche erforderliche Zeit an die Zufahrtsstelle des Fahrzeugs als eine Informationsausgabe liefert.

**7.** Wegführungsvorrichtung gemäß Anspruch 1, **gekennzeichnet durch** das Zeitsummenextrahierungsmittel (15) zum Extrahieren aus erforderlichen Außen- und Innenspur-Zeitsummen für diejenigen jeweiligen Intervalle, die von dem jeweiligen Zeitsummenberechnungsmittel berechnet werden, erforderliche Außen- und Innenspur-Zeitsummen für das Intervall, zu dem die jeweilige Zufahrtsstelle des Fahrzeugs in der Ringstraße gehört, und bei der das Positionsinformationsmittel die von dem Zeitextrahierungsmittel extrahierte erforderlichen Außen- und Innenspur-Zeitsummen an die Zufahrtsstelle des Fahrzeugs als eine Informationsausgabe liefert.

**8.** Wegführungsvorrichtung gemäß Anspruch 1, **gekennzeichnet** ferner durch Zeitsummenextrahierungsmittel (15) zum Extrahieren aus erforderlichen Außen- und Innenspur-Zeitsummen für diejenigen jeweiligen Intervalle, die von dem jeweiligen Zeitsummenberechnungsmittel berechnet werden, erforderliche Außen- und Innenspur-Zeitsummen für das Intervall, zu dem die jeweilige Zufahrtsstelle des Fahrzeugs in der Ringstraße gehört, Außenspur-Zeitsummen-Auswahlmittel (15) zum Auswählen aus den von den Zeitsummenextrahiermittel extrahierten erforderlichen Außenspur-Zeitsummen eine erforderliche Außenspur-Zeitsumme, die der jeweiligen Zufahrtsstelle entspricht, um die Position der gleichen erforderlichen Zeit entlang der Außenspur zu erreichen, Innenspur-Zeitsummen-Auswahlmittel (15) zum Auswählen aus der von dem Zeitsummenextrahiermittel extrahierten erforderlichen Innenspur-Zeitsumme eine erforderliche Innenspur-Zeitsumme, die der jeweiligen Zufahrtsstelle entspricht, um die Position der gleichen erforderlichen Zeit entlang der Innenspur zu erreichen, bei der das Positionsinformationsmittel die von dem jeweiligen Zeitsummenauswahlmittel ausgewählten erforderlichen Außen- und Innen-Zeitsummen an die Zufahrtsstelle des Fahrzeugs liefert.

**9.** Wegführungsvorrichtung gemäß Anspruch 5, **gekennzeichnet durch** Intervallextrahierungsmittel (16) zum Extrahieren des jeweiligen Intervalls, das von dem Stauausmaßentscheidungsmittel als gestaut entschieden wurde, und Stauintervallinformationsmittel zum Liefern des von dem Intervallextrahierungsmittel extrahierten überfüllten Intervalls an die Zufahrtsstelle des Fahrzeugs als eine Informationsausgabe.

**10.** Wegführungsvorrichtung gemäß Anspruch 1, **dadurch gekennzeichnet, daß** das Positionsinformationsmittel als ein Diagramm auf einer Anzeigevorrichtung an der Zufahrtsstelle einen zu der Position der gleichen erforderlichen Zeit führenden Pfad entlang der Außenspur and einen zu der gleichen erforderlichen Zeit entlang der Innenspur führenden Pfad anzeigt.

**11.** Wegführungsvorrichtung gemäß Anspruch 1, **dadurch gekennzeichnet, daß** das Positionsinformationsmittel als ein Diagramm in unterschiedlichen Farben auf einer elektrischen Straßenzeichentafel an der Zufahrtsstelle einen zu der Position der gleichen erforderlichen Zeit führenden Pfad entlang der Außenspur and einen zu der Position der gleichen erforderlichen Zeit entlang der Innenspur führenden Pfad anzeigt.

**12.** Wegführungsvorrichtung gemäß Anspruch 1, **dadurch gekennzeichnet, daß** das Positionsinformationsmittel Information der entschiedenen Position der gleichen erforderlichen Zeit als eine Funkwelle an das sich an der Zufahrtstelle vorbeibewegende Fahrzeug durch eine Antenne an der Zufahrtstelle ausgibt.

**13.** Wegführungsvorrichtung gemäß Anspruch 1, **dadurch gekennzeichnet, daß** das Positionsinformationsmittel umfaßt: Radiowellenausgabemittel (17), um Bildinformation, die einen Pfad, der zu der Position der gleichen erforderlichen Zeit entlang einer Außenspur führt, und einen Pfad, der zu der Position der gleichen erforderlichen Zeit entlang der Innenspur führt, enthält, als eine Funkwelle an das sich an der Zufahrtstelle vorbeibewegende Fahrzeug durch eine an der Zufahrtstelle angeordnete Antenne auszugeben, und eine Bildempfangsvorrichtung (20), die in dem jeweiligen Fahrzeug angebracht ist, um die als Funkwelle ausgegebene Bildinformation zu empfangen und die Information an die Fahrzeuganzeige auszugeben.

**Revendications**

**1.** Appareil de guidage routier pour rocade, **caractérisé en ce qu'**il comprend :

plusieurs dispositifs de détection de circulation routière (4a, 4b) destinés à détecter des données de circulation routière relatives à des véhicules qui se déplacent le long de voies externe et interne sur une rocade (1) divisée en plusieurs intervalles (3),
un dispositif de calcul de temps (4a, 4b) destiné à calculer un temps nécessaire d'intervalle dont doit disposer chaque véhicule pour parcourir l'intervalle respectif le long des voies interne et externe d'après les données respectives de circulation détectées par le dispositif de détection de circulation routière,
un dispositif (11) de calcul de somme de temps de voie externe destiné à calculer une somme de temps nécessaires de voie externe comprenant les temps qu'il faut pour que le véhicule atteigne l'intervalle respectif le long de la voie externe depuis un emplacement d'approche du véhicule désigné à la rocade,
un dispositif de calcul de somme de voie interne (12) destiné à calculer une somme de temps nécessaires de voie interne des temps nécessaires pour que le véhicule atteigne l'intervalle respectif le long de la voie interne depuis un emplacement d'approche du véhicule désigné à la rocade,
un dispositif (13) de décision de position destiné à détecter un intervalle correspondant au temps le plus proche entre les sommes respectives des temps nécessaires de la voie externe et de la voie interne calculés par les dispositifs respectifs de calcul de somme de temps et à déterminer une position de temps nécessaires égaux dans l'intervalle détecté, et
un dispositif (14, 6) d'information de position destiné à transmettre la position de temps nécessaires égaux qui est déterminée par le dispositif de décision de position à l'emplacement d'approche du véhicule par transmission d'informations.

**2.** Appareil de guidage routier selon la revendication 1, **caractérisé en ce que** les données de circulation routière détectées par le dispositif respectif de détection de circulation routière correspondent à la vitesse moyenne des véhicules se déplaçant dans l'intervalle auquel se trouve le dispositif de détection de circulation routière, et le dispositif de calcul de temps détermine un temps nécessaire d'intervalle par division d'une longueur initialement mesurée de l'intervalle par la vitesse détectée.

**3.** Appareil de guidage routier selon la revendication 1, **caractérisé en ce que** les données de circulation routière détectées par le dispositif respectif de détection de circulation routière comprennent une vitesse moyenne des véhicules se déplaçant dans l'intervalle dans lequel le dispositif de détection de circulation routière se trouve, le nombre de véhicules qui se déplacent dans cet intervalle par unité de temps, et un taux d'occupation indiquant le rapport du temps de détection de véhicule pour la détection du véhicule dans l'unité de temps et de l'unité de temps.

**4.** Appareil de guidage routier selon la revendication 3, **caractérisé en ce que** la vitesse, le nombre de véhicules et le taux d'occupation détecté par les dispositifs respectifs de détection de circulation routière sont des valeurs obtenues par formation d'une moyenne au cours du temps de ces valeurs sur plusieurs périodes, mesurées sur un temps prédéterminé, et mesurées sur plusieurs périodes adjacentes.

5. Appareil de guidage routier selon la revendication 3, **caractérisé en ce que** le dispositif de calcul de temps comprend un dispositif de décision d'étendue d'encombrement destiné à classer l'état de circulation des véhicules dans l'intervalle respectif en trois états, correspondant à un état encombré, un état de faible amplitude de circulation et un état de circulation libre, d'après la vitesse, le nombre de véhicules et le taux d'occupation sous forme de moyennes données par le dispositif de détection de circulation routière et un dispositif de calcul d'un temps respectif nécessaire d'intervalle à l'aide d'une équation de calcul déterminée au préalable pour chaque état de circulation de chaque véhicule déterminé par le dispositif de décision d'étendue d'encombrement.

6. Appareil de guidage routier selon la revendication 1, **caractérisé par** un dispositif d'extraction de temps destiné à extraire, comme temps nécessaires égaux, parmi les sommes de temps nécessaires des voies externe et interne des intervalles respectifs qui sont calculées par le dispositif respectif de calcul de somme de temps, l'une des sommes des temps nécessaires des voies externe et interne à laquelle appartient une position de temps nécessaires égaux déterminée par le dispositif de décision de position, et dans lequel le dispositif d'information de position donne les temps nécessaires égaux extraits par le dispositif d'extraction de temps à l'emplacement d'approche du véhicule comme information de sortie.

7. Appareil de guidage routier selon la revendication 1, **caractérisé par** un dispositif (15) d'extraction de sommes de temps destiné à extraire, des sommes des temps nécessaires externe et interne pour les intervalles respectifs calculés par les dispositifs de calcul de sommes de temps, des sommes de temps nécessaires de voies externe et interne pour l'intervalle auquel appartient l'emplacement respectif d'approche du véhicule sur la rocade, et dans lequel le dispositif d'information de position donne les sommes des temps nécessaires des voies externe et interne extraits par le dispositif d'extraction de sommes de temps à l'emplacement d'approche du véhicule comme information de sortie.

8. Appareil de guidage routier selon la revendication 1, **caractérisé en ce qu'**il comprend en outre un dispositif (15) d'extraction de sommes de temps destiné à extraire, des sommes de temps nécessaires des voies interne et externe pour les intervalles calculés par les dispositifs de calcul de sommes de temps respectifs, les sommes de temps nécessaires des voies externe et interne pour l'intervalle auquel appartient l'emplacement respectif d'approche dans la rocade, un dispositif (15) de sélection de sommes de temps de voie externe destiné à sélectionner, parmi les sommes de temps nécessaires de voie externe extraites par le dispositif d'extraction de sommes de temps, une somme de temps nécessaires de voie externe qui correspond à l'emplacement respectif d'approche pour atteindre l'emplacement des temps nécessaires égaux le long de la voie externe, un dispositif (15) de sélection de sommes de temps de voie interne destiné à sélectionner, parmi les sommes de temps nécessaires de voie interne extraites par le dispositif d'extraction de sommes de temps, une somme de temps nécessaires de voie interne qui correspond à l'emplacement respectif d'approche pour atteindre l'emplacement de temps nécessaires égaux suivant la voie interne, dans lequel le dispositif d'information de position transmet les sommes de temps nécessaires externe et interne sélectionnées par le dispositif respectif de sélection de sommes de temps à l'emplacement d'approche du véhicule.

9. Appareil de guidage routier selon la revendication 5, **caractérisé par** un dispositif (16) d'extraction de l'intervalle destiné à extraire l'intervalle respectif déterminé par le dispositif de décision d'étendue d'encombrement comme étant encombré, et un dispositif d'information d'intervalle encombré destiné à donner l'intervalle qui bouchonne extrait par le dispositif d'extraction d'intervalle à l'emplacement d'approche du véhicule comme information de sortie.

10. Appareil de guidage routier selon la revendication 1, **caractérisé en ce que** le dispositif d'information de position affiche, sous forme d'un diagramme sur un dispositif d'affichage placé à l'emplacement d'approche, un trajet conduisant à la position de temps nécessaires égaux le long de la voie externe et un trajet conduisant à la position de temps nécessaires égaux le long de la voie interne.

11. Appareil de guidage routier selon la revendication 1, **caractérisé en ce que** le dispositif d'information de position affiche, en couleurs différentes sur un panneau électrique de signalisation routière placé à l'emplacement d'approche, un trajet conduisant à la position des temps nécessaires égaux le long de la voie externe et un trajet conduisant à la position des temps nécessaires égaux le long de la voie interne.

**12.** Appareil de guidage routier selon la revendication 1, **caractérisé en ce que** le dispositif d'information de position transmet des informations relatives à la position déterminée de temps nécessaires égaux, sous forme d'ondes radioélectriques, au véhicule qui se déplace à l'emplacement d'approche à l'aide d'une antenne disposée à l'emplacement d'approche.

**13.** Appareil de guidage routier selon la revendication 1, **caractérisé en ce que** le dispositif d'information de position comprend un dispositif (17) d'émission d'ondes radioélectriques destiné à émettre des informations d'image contenant un trajet conduisant à la position des temps nécessaires égaux le long d'une voie externe et un trajet conduisant à la position des temps nécessaires égaux le long de la voie interne sous forme d'une onde radioélectrique, vers le véhicule passant à l'emplacement respectif d'approche à l'aide d'une antenne placée à l'emplacement d'approche et d'un dispositif récepteur d'image (20) monté sur le véhicule respectif et destiné à recevoir les informations d'image transmises sous forme d'une onde radioélectrique et à émettre l'information vers le véhicule sur un dispositif d'affichage.

FIG. 1

START

INTERVAL i = 1 — P1

CALCULATE AN OUTER LANE
REQUISITE TIME SUM TOi
OVER A RANGE OF INTERVALS
1 TO i — P2

CALCULATE AN INNER LANE
REQUISITE TIME SUM TIi
OVER A RANGE OF INTERVALS
N TO i — P3

i = N — P4

NO

i = i + 1 — P5

YES

i = 1 — P6

i < N

NO

P7

YES

i = i + 1 — P9

P9

TOi ≧ TIi — P8

NO

YES

TOi = TIi — P10

NO

P10

YES

DECIDE AN INTERVAL
1 TO INTERVAL N
BOUNDARY AS AN
EQUAL REQUISITE
TIME LOCATION O_{TE} — P13

DECIDE A MIDPOINT
OF AN INTERVAL i AS
AN EQUAL REQUISITE
TIME LOCATION O_{TE} — P11

DECIDE AN INTERVAL
i TO INTERVAL i −1
BOUNDARY AS AN
EQUAL REQUISITE
TIME LOCATION O_{TE} — P12

F I G. 2

END

STATE OF A LOOP HIGHWAY

F I G. 3

17

F I G. 4

EP 0 760 507 B1

FIG. 5

STATE OF A LOOP HIGHWAY

OUTER LANE

INNER LANE

FIG. 6

FIG. 7

STATE OF A LOOP HIGHWAY

CONGESTED

OUTER LANE

INNER LANE

F I G. 8

IT TAKES AN EQUAL REQUISITE
TIME TO REACH A △△ LOCATION.

F I G. 9

F I G. 10

20

F I G. 11

STATE OF A LOOP HIGHWAY

D

A

CONGESTED

F I G. 12